# EUROPEAN PATENT SPECIFICATION

(11) **EP 0 465 535 B1**
(45) Date of publication and mention of the grant of the patent: **03.06.1998**
(21) Application number: 90905461.1
(22) Date of filing: 30.03.1990
(51) Int. Cl.: C08B 37/16

(54) **REGIOSELECTIVE SUBSTITUTIONS IN CYCLODEXTRINS**
REGIOSELEKTIVE SUBSTITUTIONEN VON CYCLODEXTRINEN
SUBSTITUTIONS SELECTIVES PAR REGION DANS DES CYCLODEXTRINES

(30) Priority: 03.04.1989 US 332606
(43) Date of publication of application: 15.01.1992
(73) Proprietor: JANSSEN PHARMACEUTICA N.V., 2340 Beerse (BE)
(72) Inventor: LINDBERG, Bengt, S-116 23 Stockolm (SE); PITHA, Josef, Baltimore, MD 21224 (US)
(74) Representative: UEXKÜLL & STOLBERG
(86) International application number: EP9000524
(87) International publication number: WO9012035

(56) References cited:
- EP-A- 146 841
- EP-A- 197 571
- DE-A- 2 260 785
- US-A- 3 459 731
- US-A- 4 727 064
- J. Carbohydrate Chemistry, Volume 7, No. 2, 1988, Marcel Dekker, Inc., KEN'ICHI TAKEIO et al.: "Derivatives of alpha-Cyclodextrin and the Synthesis of 6-0- alfa-D-Glucopyranosyl-alfa-Cyclodextrin", pages 293-308
- Int. J. Parm. 29 (1986) 73-82
- Pharm. Res. 5[11] (1988) 713-7
- Recl. Trav. Chim. Pays-Bas 96 (1977) 25-30

## Description

The development of procedures which would yield mixtures of cyclodextrin derivatives in which substitution at the wide side of the toroid would be predominant was desired. Such a specific pattern of substitution has not been thought to be realizable by simple means, i.e., using cheap reagents without fractionation of the product. Nevertheless, that has been accomplished and here we disclose that by proper selection of preparative conditions mixtures of cyclodextrin derivatives with a specific pattern of substitution can be obtained. That discovery was made possible through a detailed analysis of cyclodextrin mixtures. That analysis, in conjunction with a fortuitous choice of reaction conditions, is the basis of the present invention. It should be noted that reagents and reaction conditions similar to those previously used by us and others have been employed. The novelty is the finding that there exist a region of reaction conditions which previously was not used and in which mixtures of cyclodextrin derivatives with unique substitution patterns are obtained; furthermore, these patterns are only slightly affected by the overall degree of substitution. That finding may be of importance since on its basis mixtures of cyclodextrin derivatives can be tailored for uses where recognition of a specific guest compound by a host is desired.

The usefulness of those derivatives of polysaccharides which assume random coil conformation depends primarily on their average degree of substitution and is only slightly affected by the differences in substitution patterns. Polysaccharide derivatives with an ordered conformation and derivatives of cyclic oligosaccharides (e.g. α-, β- or γ-cyclodextrins), which are *de facto* ordered by the presence of a cycle, present a different problem; there the substitution pattern may prefoundly affect their usefulness. The shape of cyclodextrins is a toroid : on the narrower side of the toroids are located all primary hydroxyls (-CH₂-OH) and on the wider sides are the secondary hydoxyls. Thus, substitution on secondary hydroxyls puts the substituents close to the wider entry of the cavity of the toroid, whereas substitutions on the primary hydroxyls close to the narrower entry. The principal use of cyclodextrins is in inclusion complexation : a guest lipophilic compound is accepted into the toroidal cavity of the host compound, i.e., of the cyclodextrin. This process is bound to be affected by specific changes at the entry sites of the host molecule. That was well demonsrated using chemically pure cyclodextrin derivatives. These compounds were prepared by multi-step synthesis requiring multiple extensive purifications and thus are available only in small quantities and at a great price. In many applications the chemical purity (individuality) of cyclodextrin derivatives is not required or may even be of a detriment. Using mixtures of cyclodextrins is often preferred since these usually do not crystallize and thus have much higher solubilities and are also better suited as coatings.

Cyclodextrins, such as α-, β- or γ-cyclodextrins, similarly to other carbohydrates, react with epoxides yielding mixtures of oligosubstituted hydroxyalkylcyclodextrins. The latter compounds were first disclosed U.S. Patent 3,459,731. These cyclodextrins were found eminently useful for pharmaceutical purposes and this use was disclosed in U.S. Patent 4,596,795, U.S. 4,727,064, U.S. Patent 4,870,060, U.S. Patent 4,764,604, Eur. Patent No. 149,197, Int. J. Pharm. 26, 77, 1985, J. Pharm. Res. 309, 1985 and J. Pharm. Sci. 75, 571, 1986. Hydroxyalkylcyclodextrins were also prepared by reaction of cyclodextrins with ethylene or propylene carbonate catalyzed by potassium carbonate; R.B. Friedman, Modified Cyclodextrins, abstract B6 of the 4th International Symposium on Cyclodextrins, April 1988, Munich, West Germany. Furthermore, preparation of mixed alkyl and hydroxyalkylcyclodextrins was the subject of two patent applications, namely Eur. Patent Appl. EP 146,841 and EP 147,685.

EP-A-0 197 571 discloses the synthesis of γ-cyclodextrin ethers or mixed ethers by reacting γ-cyclodextrin with O-alkylating agents such as alkyl-, hydroxyalkyl-, carboxyalkyl halides, sulfonates and oxirans in the presence of a base. The base is selected from e.g. alkali or earth alkaline metal hydroxides, hydrides or amides . The synthesis is performed in water or in an organic solvent.

C. van Hooidonk et al., Recueil, Journal of the Royal Netherlands Chemical Society, 96/1, 1977, 25, describe a three-step synthesis to introduce the 2-(hydroxyimino)ethyl group into cyclohexaamylose at the 2-0 or 3-0 position. O-[2-(hydroxyimino)ethyl]-cyclohexaamylose serves as an enzyme model with esterolytic activity.

The multicomponent mixtures of hydroxyalkylcyclodextrins could be characterized using mass spectrometry, as far as number of substituent per cyclodextrin is concerned. Each of the peaks in such a spectrum corresponds to certain degree of substitution, but since there is a great number of possible isomeric compounds at any degree of substitution, the mixtures are only partially characterized by direct mass spectrometry. An advance in characterization was obtained by hydrolysis of hydroxypropylcyclodextrin mixtures and evaluation of the hydroxypropylglucose mixtures thus obtained by mass spectrometry (Pharmaceut. Res. 5,713-717, 1988). These results show that the substituents in hydroxypropylcyclodextrins are not evenly distributed between the glucose residues. A large number of hydroxyalkylcyclodextrins has been prepared and characterized in this manner and the average degree of substitution was found to depend primarily on the ratio of reagents used. These quite diverse reaction conditions yielded mixtures with a rather similar distribution of degree of substitution (Int. J. Pharm. 29 :73-82, 1986: Pharmaceut. Res. 5 : 713-717, 1988). Consequently, the reaction conditions (i.e., strength of alkali added) were chosen primarily on the basis of convenience of manipulation of the mixtures. In different protocols (Int. J. Pharm. 29 : 73-82, 1986; Pharmaceut. Res. 5: 713-717, 1988) the concentration of sodium hydroxide solution. which is used as a solvent for the other component. ranged between 5-17% w/w preferably about 11% w/w. At concentrations lower than these the reaction proceeds sluggishly; at higher concentrations the solubility of β-cyclodextrin decreases and also the removal of sodium hydroxide after the reaction becomes tedious. Thus, in production of hydroxyalkylcyclodextrins the practical range of the concentrations of sodium hydroxide solution used as a solvent were 5-17% and there was no incentive to venture outside of this range.

The aim of the present invention is to provide a process for preparing regiospecifically hydroxyalkylated α-, β- or γ-cyclodextrins through the control of basicity of the reaction mixtures which are comprised of epoxide and cyclodextrins and an aqueous alkali metal hydroxide solution. It was found that through the proper control of basicity the substitution may be directed toward the wide opening of the cavity of cyclodextrins i.e. toward hydroxyls 2 or 2,3 of glucose residues with little substitution on hydroxyl 6. In aqueous media the basicity of the reaction mixtures required for said regiospecificity may be obtained by a decrease of the previously used concentration range (5-17%) of sodium hydroxide solution, which is used as a reaction solvent for other components of the reaction mixtures. These concentrations represent less than 2.5% (0.625 mol/kg) of sodium hydroxide content in the fully assembled reaction mixtures. The above method may also be applied for the preparation of mixtures of hydroxyalkylcyclodextrins which vary in their avenge degree of substitution, but in which the pattern of substitution is not changed.

A further aspect of the invention is to provide regiospecific hydroxyalkylated α-, β- or γ-cyclodextrins wherein the substitution is mainly on the hydroxyls 2 or 2,3 of the glucose residues with little substitution on hydroxyl 6, and fully or partly alkylated derivatives of these regiospecific hydroxyalkylated α-, β- or γ-cyclodextrins. Particular hydroxyalkylcyclodextrins substituted mainly on the wide side of the cavity have a relative distribution of the substitution on the 2 hydroxyl groups versus the 6 hydroxyl groups which varies from about 2:1 to about 20:1, preferably from about 5:1 to about 20:1, or from about 10:1 to about 15:1.

Still a further aspect of the invention is to provide mixtures comprising the above regiospecific hydroxyalkylated α-, β-, or γ-cyclodextrins.

In the foregoing definitions the term "hydroxyalkyl " defines bivalent straight or branch chained hydrocarbon radicals containing from 2 to 6 carbon atoms such as hydroxyethyl, hydroxypropyl or hydroxyisobutyl groups.

Since a hydroxy moiety of the cyclodextrin can be substituted by a hydroxyalkyl unit which itself can be substituted with yet another hydroxyalkylated unit, the average molar substitution (M.S.) is used as a measure of the average number of alkylated hydroxy functions per mole of glucose uniL Particular cyclodextrins according to the present invention have a M.S. which is in the range of 0.125 to 10, in particular of 0.3 to 3, or from 0.3 to 1.5. The average substitution degree (D.S.) expresses the average number of substituted hydroxyls per glucose unit. Particular cyclodextrins according to the present invention have a D.S. which is in the range of 0.125 to 3, in particular of 0.2 to 2, or from 0.2 to 1.5.

Hydroxyalkylated α-, β- or γ-cyclodextrins according to the present invention are prepared by an alkali catalyzed reaction of epoxides with cyclodextrins in a suitable solvent preferably at a temperature between 0 to 100°C, or between 0 to 70°C. A suitable solvent for carrying out the process of the invention is an aqueous alkali metal hydroxide solution. As the alkali metal hydroxide used may be mentioned lithium hydroxide, barium hydroxide, sodium hydroxide and potassium hydroxide. Of these, sodium hydroxide is preferable. The concentration of the sodium hydroxide solution which is used as a reaction solvent for other components of the reaction mixtures is either lower than 5% (w/w), preferably lower than 4% (w/w). In some instances, equinormal lithium, potassium or barium hydroxide solutions may also be applied. These concentrations represent typically less than 2.5% of alkali metal hydroxide content in the fully assembled reaction mixtures. The molar ratio of alkali metal hydroxide versus cyclodextrin is in the range of 0.5 to 3.5, more in particular less than 2.5. The epoxide concentration in the final mixture may vary from about 1% to about 30%, more in particular from about 2% to about 20%. Particular samples of hydroxypropylated β-cyclodextrin were prepared by reacting β-cyclodextrin with propylene oxide in aqueous sodium hydroxide (Example 1). The reaction conditions used in these preparations are summarized in Table I.

**Table I.**

| Summary of preparative Conditions of Hydroxypropyl-β-cyclodextrins | |
|---|---|
| | Examples |
| | 1 |
| sodium hydroxide solution used as a solvent (%w/w) | 1.5% |
| | |
| Final reaction mixture (%w/w) | |
| sodium hydroxide | 1.1% |
| cyclodextrin (anhydrous) | 15.1% |
| propylene oxide | 10.9% |
| | |
| Final reaction mixture (molar ratio) | |
| sodium hydroxide/cyclodextrin | 2.1 |
| propylene oxide/cyclodextrin | 14.3 |

Pure regiospecific hydroxypropylated cyclodextrin may be isolated from the mixtures by removal of the unreacted starting material by art known procedures such as, extraction with organic solvents, adsorption chromatograpy, selective crystallization and combinations of these techniques.

In order to determine the distribution of substituents between the different positions in the α-D-glucopyranosyl residues of β-cyclodextrin each product was permethylated (Example 2), hydrolysed, and the resulting glucose ethers reduced, 3 acetylated, and analyzed as alditol acetates, by gas liquid chromatography (Example 3).

There are several points to be clarified before the results are evaluated. Etherification with an epoxide such as propylene oxide is a complicated reaction. When racemic propylene oxide is used, diastereomeric ethers are formed, which are only partially separated by the analytical method used. In order to fully address this complication (Example 1) was prepared using (S)-propylene oxide, which is bound to yield a simpler pattern. Another complication is that the oxirane ring in propylene oxide can be opened either by attack on 0-1, which is the predominating reaction and gives a 2-hydroxypropyl ether, or on 0-2, giving a 2-(1-hydroxypropyl)ether. Two derivatives of the latter type were observed in the present study. The third type of complication is due to the introduction of additional hydroxyls by the substituent. Fortunately, the secondary hydroxyl of the 2-hydroxypropyl group should not be very reactive, and alkylation in this position should consequently not be very important. Nevertheless, small amounts of such derivatives were observed. Tne results of the analyses are summarized in Table II.

Conventional abbreviations were used, e.g., S₂ denotes mono-substitution on 0-2, S₂₂₆ denotes bi-substitution on 0-2 (by -CH₂-C(CH₃)H-O-CH₂CH(OCH₃)-CH₃ group) and mono-substitution on 0-6; glucose-derived numbering was used for alditols. In some analyses under methylation, especially in the 3-position, was observed. The products, however, were identified from their mass spectra, and the molar percentages added to those of the corresponding fully methylated components. Two 2-(1-methoxypropyl) ethers were observed with this group in the 2- and the 6-posidon of a glucosyl residue, respectively. The yields of these ethers were 2-4% of the corresponding 1-(2-methoxypropyl)ethers, and reflects the relative reactivities at the primary and the secondary position of propylene oxide, respectively.

**Table II**

| Composition of Alditol Acetates in Mole % | |
|---|---|
| | Example |
| Substitution pattern by 2-methoxypropyl groups | 1 |
| S₀ | 74.4 |
| S₀ non-methylated on 0-3 | - |
| Total non-substituted | 74.4 |
| | |
| S₂ | 14.6 |
| S₂ non-methylated on 0-3 | - |
| S₂ 2-(1-methoxypropyl)- | - |
| S₃ | 4.8 |
| S₃ non-methylated on 0.6 | - |
| S₆ | 2.6 |
| S₆ non-methylated on 0-3 | - |
| S₆ 2-(1-methoxypropyl)- | - |
| | |
| Total non-substituted | 22.0 |
| | |
| S₂₃ | 2.2 |
| S₂₆ | 0.9 |
| S₂₆ non-methylated on 0.3 | - |
| S₃₆ | 0.5 |
| S₆₆ | - |
| | |
| Total disubstituted | 3.6 |
| | |
| S₂₂₆ | - |
| S₂₃₆ | - |
| S₂₆₆ | - |
| S₆₆₆ | - |
| | |
| Total trisubstituted | 0 |

The relative reactivities at the three different positions in the α-D-glucopyranosyl groups may be determined from the molar percentages of the ethers. Sperlin equations (H.M. Sperlin in E. Ott, H.M. Sperlin and M.W. Grafflin (Eds.) Cellulose and Cellulose Derivatives, Part II, Interscience, New York, 1954, pp. 673-712) were used to determine the relative reactivities, k₂, k₃ and k₆, from the distribution of the substituents. The results in Table II can thus be reduced to those three parameters (Table III). The value for k₂ and k₃ there concern the relative reactivities when the other hydroxyl is not alkylated. Further calculations indicate that these reactivities are considerably enhanced when the other hydroxyl becomes alkylated, in particular the substitution on 0-3 increases the reactivity of 0-2 hydroxyls.

**Table III**

| Relative Reactivities at the 2,3- and 6-Positions and Average Degree of Substitution Values for a 2-Hydroxypropyl Ether of β-cyclodextrin | | | | | |
|---|---|---|---|---|---|
| | | | | Average Degree of Substitution | |
| Example | propylene oxide | %NaOH^{a} | k₂:k₃:k₆ | From mole % of ethers | From m.s. |
| 1 | (S) | 1.5 | 1 : 0.36 : 0.08 | 2.0 | 3.4 |

| | | | | | |
|---|---|---|---|---|---|
| ^{a} Concentration of aqueous sodium hydroxide solution (w/w) used as solvent for the other reaction components. | | | | | |

The relative reactivities at 0-2 and 0-3 are rather independent of the alkali concentration during the etherification. The relative reactivity of 0-6 versus 0-2, however, varies from approximately 1:5 at low alkali concentration to 7:1 at high alkali concentration. These drastic changes in the reactivity of 0-6 are the basis for the regiospecificity observed at extremely low alkali concentrations, a phenomenon which is the subject of the present invention.

The thus prepared regiospecific hydroxyalkylated cyclodextrins may also be derivatized with an alkylating agent to obtain fully or partly substituted mixed ethers. The alkylation reaction may be carried out with appropriate alkylating agents such as alkylsulfates or alkylhalogenides in a base, liquid reaction medium containing an alkali metal hydroxide, water and, optionally, at least one organic solvent such as, for example, dimethoxyethane or isopropanol. In this regard, it is important to point out that if a regiospecific substitution is followed by a non-specific one even the latter acquires a measure of regiospecificity.

The following examples are intended to illustrate and not to limit the scope of the present invention in all its aspects.

### Example 1

### Preparation of (S)-hydroxypropyl-β-cyclodextrin

β-Cyclodextrin (13.3 g of hydrate, i.e., 11.5 g anhydrous, 0.010 moles) was dissolved in a solution of sodium hydroxide (0.822 g, 0.0206 mol in 54 ml distilled water, i.e., 1.5%) by stirring at 60°C. The increased amount of alkaline solution used was necessitated by the low solubility of cyclodextrin at very low (present case) or very high (30%) concentration of sodium hydroxide. The solution was placed into a round flask, cooled to ice bath temperature and after attachement of a reflux condenser containing a dry ice-acetone mixture, (S)-propylene oxide (10 ml, 8.29 g, 0.143 moles), a commercial preparation obtained from Aldrich Chemical Co., was added, dropwise with constant stirring. Reaction mixture was kept overnight at 0-5°C and thereafter for 4 hours at room temperature. Then the mixture was neutralized with sulfuric acid (10%) to pH 7.5 and evaporated to dryness. Since the product is not well soluble either in ethanol or in water the residue, after evaporation, was suspended in distilled water (100 ml) and dialyzed against distilled water for 5 hours at room temperature. The retained suspension was evaporated to dryness, yielding a white powdery product (14,23 g).

### Example 2

### Permethylation of (S)-hydroxypropyl-β-cyclodextrins

All the procedures used were similar to the following : sodium hydride (2.1 g, as above, i.e., 0.07 moles) was added to anhydrous dimethyl sulfoxide (20 ml) under argon and the mixture heated for 1 hour to about 60°C. Thereafter, well dried (3 hours, 110°C) hydroxypropyl-β-cyclodextrin (4 g) dissolved in dimethyl sulfoxide (15 ml) was added and left to react, under argon and while stirring at room temperature, for an additional 3 hours. Then the reaction mixture was cooled in an ice bath and methyl iodide (10 ml, 0.161 moles) added dropwise. After another hour at ice bath temperature the mixture was left stirring overnight. Then water (24 ml) was added while cooling and the product extracted twice by trichloromethane (total 90 ml). The trichloromethane extract was washed with water (20 ml) and evaporated. The residue was treated with water (25 ml) and three times extracted with ether (total 75 ml), ether extracts washed with water, and evaporated. The residue was dissolved in ether (100 ml), stirred for 30 minutes with neutral alumina, filtered, and evaporated yielding 3.7 g of permethylated product.

### Example 3

### Analysis of Permethyl Derivatives of hydroxypropyl-β-cyclodextrins

The permethylated product (3 mg) was dissolved in M aqueous trifluoroacetic acid (0.5 ml), kept in a screw-cap tube at 100°C overnight and concentrated by flushing with air. The residue and sodium borohydride (10 mg) were dissolved in M aqueous ammonia (0.5 ml) and kept at room temperature for 1 hour. The solution was acidified with 50% acetic acid (2 drops) and concentrated. Boric acid was removed by codistillation first with acetic acid-methanol (1:9, 5 ml) and then with methanol (25 ml). The residue was treated with acetic anhydride and pyridine (2:1, 0.5 ml) at 100°C for 30 minutes, concentrated, and partitioned between trichloromethane and water (2:1, 6 ml). The trichloromethane phase was concentrated and the residue analysed by g.l.c. and g.l.c.-m.s.

G.l.c. was performed on a Hewlett Packard 5830 A instrument fitted with a flame ionization detector, with hydrogen as the carrier gas. G.lc.-m.s. was performed on a Hewlett Packard 5790-5970 system with helium as the carrier gas. A Hewlett Packard Ultra 2 (cross-linked 5% phenyl methyl silicone) fused silica, capillary column (25 m, 0.20 mm i.d.) was used. Temperature program : 8 minutes at 185°C, → 250°C at 5° per minute, 250°C for 10 minutes.

## Claims (Claims for the following Contracting State(s): AT, BE, CH, DE, DK, FR, GB, IT, LI, LU, NL, SE)

1. A process for preparing regiospecifically hydroxyalkylated α-, β- or γ-cyclodextrins wherein the substitution is directed toward the wider opening of the cavity, mainly on the secondary hydroxyls on the 2-position or 2,3 position of the glucose residues of the cyclodextrins in a reaction mixture comprising epoxide which is a straight or branch chained hydrocarbon of 2 to 6 carbon atoms having an epoxy group, cyclodextrin and an aqueous alkali metal hydroxide solution wherein the alkali metal hydroxide concentration in the fully assembled reaction mixture is less than 0.625 mol/kg (concentration of a 2.5 wt.-% aqueous solution of sodium hydroxide), wherein the molar ratio of alkali metal hydroxide/cyclodextrin is in the range of 0.5 to 3.5.

2. A process according to claim 1 wherein the epoxide is propylene oxide and the cyclodextrin is β-cyclodextrin.

3. A process according to claim 1 or 2 for the preparation of mixtures of α-, β- or γ-hydroxyalkylcyclodextrins which vary in their average degree of substitution but in which the pattern of substitution is not changed.

4. A regiospecifically hydroxyalkylated α-, β- or γ-cyclodextrin obtainable by a process according to claims 1 to 3.

5. Regiospecifically hydroxyalkylated α-, β- or γ-cyclodextrins according to claim 4 wherein the substitution is directed toward the wider opening of the cavity of the cyclodextrins, the relative distribution of the substitution on the 2-hydroxyl groups versus the 6-hydroxyl groups on the glucose residues being from 2:1 to 20:1.

6. Regiospecifically hydroxyalkylated α-, β- or γ-cyclodextrins according to claim 5 wherein the relative distribution of the substitution on the 2-hydroxyl groups versus the 6-hydroxyl groups varies from 5:1 to 15:1.

7. A process for preparing fully or partly alkylated derivatives of regiospecifically hydroxyalkylated α-, β- or γ-cyclodextrins defined in claims 5 or 6 characterized by reacting the latter with an alkyl sulfate or an alkyl halide in a reaction medium containing an alkali metal hydroxide, water, and optionally an organic solvent.

8. Fully or partly alkylated derivatives of the regiospecifically hydroxyalkylated α-, β- or γ-cyclodextrins defined in claims 5 or 6.

## Claims (Claims for the following Contracting State(s): ES)

1. A process for preparing regiospecifically hydroxyalkylated α-, β- or γ-cyclodextrins wherein the substitution is directed toward the wider opening of the cavity, mainly on the secondary hydroxyls on the 2-position or 2,3 position of the glucose residues of the cyclodextrins in a reaction mixture comprising epoxide which is a straight or branch chained hydrocarbon of 2 to 6 carbon atoms having an epoxy group, cyclodextrin and an aqueous alkali metal hydroxide solution wherein the alkali metal hydroxide concentration in the fully assembled reaction mixture is less than 0.625 mol/kg (concentration of a 2.5 wt.-% aqueous solution of sodium hydroxide), wherein the molar ratio of alkali metal hydroxide/cyclodextrin is in the range of 0.5 to 3.5.

2. A process according to claim 1 wherein the epoxide is propylene oxide and the cyclodextrin is β-cyclodextrin.

3. A process according to claim 1 or 2 for the preparation of mixtures of α-, β- or γ-hydroxyalkylcyclodextrins which vary in their average degree of substitution but in which the pattern of substitution is not changed.

4. A process according to claims 1 to 3 for preparing regiospecifically hydroxyalkylated α-, β- or γ-cyclodextrins wherein the relative distribution of the substitution on the 2-hydroxyl groups versus the 6-hydroxyl groups on the glucose residues is from 2:1 to 20:1.

5. The process of claim 4 wherein the relative distribution of the substitution on the 2-hydroxyl groups versus the 6-hydroxyl groups varies from 5:1 to 15:1.

6. A process for preparing fully or partly alkylated derivatives of regiospecifically hydroxyalkylated α-, β- or γ-cyclodextrins defined in claims 4 or 5 characterized by reacting the latter with an alkyl sulfate or an alkyl halide in a reaction medium containing an alkali metal hydroxide, water, and optionally an organic solvent.

## Patentansprüche (Patentansprüche für folgende(n) Vertragsstaat(en): AT, BE, CH, DE, DK, FR, GB, IT, LI, LU, NL, SE)

1. Verfahren zur Herstellung regiospezifisch hydroxyalkylierter α-, β- oder γ-Cyclodextrine bei dem die Substitution zur weiteren Öffnung des Hohlraums dirigiert wird, hauptsächlich an die sekundären Hydroxylgruppen in der 2-Position oder 2,3-Position der Glucosereste des Cyclodextrins, in einer Reaktionsmischung, die ein Epoxid, das ein geradkettiger oder verzweigter Kohlenwasserstoff mit 2 bis 6 Kohlenstoffatomen und einer Epoxygruppe ist, Cyclodextrin und eine wäßrige Lösung eines Alkalimetallhydroxids enthält, wobei die Konzentration des Alkalimetallhydroxids in der vollständig zusammengesetzten Reaktionsmischung kleiner als 0,625 mol/kg ist (Konzentration einer 2,5gew.-%igen wäßrigen Lösung von Natriumhydroxid) und wobei das molare Verhältnis von Alkalimetallhydroxid/Cyclodextrin im Bereich von 0,5 bis 3,5 liegt.

2. Verfahren gemäß Anspruch 1, bei dem das Epoxid Propylenoxid und das cyclodextrin β-Cyclodextrin ist.

3. Verfahren gemäß Anspruch 1 oder 2 zur Herstellung von Mischungen aus α-, β- oder γ-Hydroxyalkylcyclodextrinen, die in ihrem durchschnittlichen Substitutionsgrad variieren aber bei denen das Sustitutionsmuster unverändert ist.

4. Regiospezifisch hydroxyalkylierte α-, β- oder γ-Cyclodextrine erhältlich durch ein Verfahren gemäß den Ansprüchen 1 bis 3.

5. Regiospezifisch hydroxyalkylierte α-, β- oder γ-Cyclodextrine gemäß Anspruch 4 bei denen die Substitution zur weiteren Öffnung des Hohlraums der Cyclodextrine dirigiert ist und die relative Verteilung der Substitution an den 2-Hydroxylgruppen zu den 6-Hydroxylgruppen der Glucosereste von 2 : 1 bis 20 : 1 beträgt.

6. Regiospezifisch hydroxyalkylierte α-, β- oder γ-Cyclodextrine gemäß Anspruch 5 bei denen die relative Verteilung der Substitution an den 2-Hydroxylgruppen zu den 6-Hydroxylgruppen von 5 : 1 bis 15 : 1 variiert.

7. Verfahren zur Herstellung vollständig oder partiell alkylierter Derivate von den in den Ansprüchen 5 oder 6 definierten, regiospezifisch hydroxyalkylierten α-, β- oder γ-Cyclodextrinen, gekennzeichnet durch das Umsetzen der letzteren mit einem Alkylsulfat oder einem Alkylhalogenid in einem Reaktionsmedium, das ein Alkalimetallhydroxid, Wasser und gegebenenfalls ein organisches Lösungsmittel enthält.

8. Vollständig oder partiell alkylierte Derivate von den in den Ansprüchen 5 oder 6 definierten regiospezifisch hydroxyalkylierten α-, β- oder γ-Cyclodextrinen.

## Patentansprüche (Patentansprüche für folgende(n) Vertragsstaat(en): ES)

1. Verfahren zur Herstellung regiospezifisch hydroxyalkylierter α-, β- oder γ-Cyclodextrine bei dem die Substitution zur weiteren Öffnung des Hohlraums dirigiert wird, hauptsächlich an die sekundären Hydroxylgruppen in der 2-Position oder 2,3-Position der Glucosereste des Cyclodextrins, in einer Reaktionsmischung, die ein Epoxid, das ein geradkettiger oder verzweigter Kohlenwasserstoff mit 2 bis 6 Kohlenstoffatomen und einer Epoxygruppe ist, Cyclodextrin und eine wäßrige Lösung eines Alkalimetallhydroxids enthält, wobei die Konzentration des Alkalimetallhydroxids in der vollständig zusammengesetzten Reaktionsmischung kleiner als 0,625 mol/kg ist (Konzentration einer 2,5gew.-%igen wäßrigen Lösung von Natriumhydroxid) und wobei das molare Verhältnis von Alkalimetallhydroxid/Cyclodextrin im Bereich von 0,5 bis 3,5 liegt.

2. Verfahren gemäß Anspruch 1, bei dem das Epoxid Propylenoxid und das Cyclodextrin β-Cyclodextrin ist.

3. Verfahren gemäß Anspruch 1 oder 2 zur Herstellung von Mischungen aus α-, β- oder y-Hydroxyalkylcyclodextrinen, die in ihrem durchschnittlichen Substitutionsgrad variieren aber bei denen das Sustitutionsmuster unverändert ist.

4. Verfahren gemäß den Ansprüchen 1 bis 3 zur Herstellung regiospezifisch hydroxyalkylierter α-, β- oder γ-Cyclodextrine bei denen die relative Verteilung der Substitution an den 2-Hydroxylgruppen zu den 6-Hydroxylgruppen der Glucosereste von 2 : 1 bis 20 : 1 beträgt.

5. Verfahren gemäß Anspruch 4, bei dem die relative Verteilung der Substitution an den 2-Hydroxylgruppen zu den 6-Hydroxylgruppen von 5 : 1 bis 15 : 1 variiert.

6. Verfahren zur Herstellung vollständig oder partiell alkylierter Derivate von den in den Ansprüchen 4 oder 5 definierten, regiospezifisch hydroxyalkylierten α-, β- oder γ-Cyclodextrinen, gekennzeichnet durch das Umsetzen der letzteren mit einem Alkylsulfat oder einem Alkylhalogenid in einem Reaktionsmedium, das ein Alkalimetallhydroxid, Wasser und gegebenenfalls ein organisches Lösungsmittel enthält.

## Revendications (Revendications pour l'(les) Etat(s) contractant(s) suivant(s): AT, BE, CH, DE, DK, FR, GB, IT, LI, LU, NL, SE)

1. Procédé de préparation de cyclodextrines α, β ou γ régiospécifiquement hydroxyalkylées, dans lequel la substitution est dirigée vers la plus grande ouverture de la cavité, principalement sur les hydroxyles secondaires en position 2 ou en position 2,3 des résidus glucose des cyclodextrines dans un mélange réactionnel comprenant de l'époxyde qui est un hydrocarbure de 2 à 6 atomes de carbone, à chaîne droite ou ramifiée, ayant un groupement époxy, de la cyclodextrine et une solution aqueuse d'un hydroxyde alcalin, dans lequel la concentration de l'hydroxyde alcalin dans l'ensemble du mélange réactionnel réuni est inférieure à 0,625 mole/kg (concentration d'une solution aqueuse d'hydroxyde de sodium à 2,5% en poids), et dans lequel le rapport molaire hydroxyde alcalin/cyclodextrine est dans la gamme de 0,5 à 3,5.

2. Procédé selon la revendication 1, dans lequel l'époxyde est l'oxyde de propylène et la cyclodextrine est la cyclodextrine β.

3. Procédé selon la revendication 1 ou 2 pour la préparation de mélanges d'hydroxyalkylcyclodextrines α, β ou γ de degré de substitution moyen variable mais dans lesquelles le mode de substitution n'est pas modifié.

4. Cyclodextrine α, β ou γ régiospécifiquement hydroxyalkylées, susceptible d'être obtenue par un procédé selon les revendications 1 à 3.

5. Cyclodextrines α, β ou γ régiospécifiquement hydroxyalkylées selon la revendication 4, dans lesquelles la substitution est dirigée vers la plus grande ouverture de la cavité des cyclodextrines, la distribution relative de la substitution sur les groupements 2-hydroxyle par rapport aux groupements 6-hydroxyle sur les résidus glucose étant de 2:1 à 20:1.

6. Cyclodextrines α, β ou γ régiospécifiquement hydroxyalkylées selon la revendication 5, dans lesquelles la distribution relative de la substitution sur les groupements 2-hydroxyle par rapport aux groupements 6-hydroxyle varie de 5:1 à 15:1.

7. Procédé de préparation de dérivés totalement ou partiellement alkylés de cyclodextrines α, β ou γ régiospécifiquement hydroxyalkylées définies dans la revendication 5 ou 6, caractérisé par la réaction de celles-ci avec un alkylsulfate ou un halogénure d'alkyle dans un milieu réactionnel contenant un hydroxyde alcalin, de l'eau et éventuellement un solvant organique.

8. Dérivés totalement ou partiellement alkylés des cyclodextrines α, β ou γ régiospécifiquement hydroxyalkylées définies dans la revendication 5 ou 6.

## Revendications (Revendications pour l'(les) Etat(s) contractant(s) suivant(s): ES)

1. Procédé de préparation de cyclodextrines α, β ou γ régiospécifiquement hydroxylées, dans lequel la substitution est dirigée vers la plus grande ouverture de la cavité, principalement sur les hydroxyles secondaires en position 2 ou en position 2,3 des résidus glucose des cyclodextrines dans un mélange réactionnel comprenant de l'époxyde qui est un hydrocarbure de 2 à 6 atomes de carbone, à chaîne droite ou ramifiée, ayant un groupement époxy, de la cyclodextrine et une solution aqueuse d'un hydroxyde alcalin, dans lequel la concentration de l'hydroxyde alcalin dans l'ensemble du mélange réactionnel réuni est inférieure à 0,625 mole/kg (concentration d'une solution aqueuse d'hydroxyde de sodium à 2,5% en poids), et dans lequel le rapport molaire hydroxyde alcalin/cyclodextrine est dans la gamme de 0,5 à 3,5.

2. Procédé selon la revendication 1, dans lequel l'époxyde est l'oxyde de propylène et la cyclodextrine est la cyclodextrine β.

3. Procédé selon la revendication 1 ou 2 pour la préparation de mélanges d'hydroxyalkylcyclodextrines α, β ou γ de degré de substitution moyen variable mais dans lesquelles le mode de substitution n'est pas modifié.

4. Procédé selon les revendications 1 à 3 pour la préparation de cyclodextrines α, β ou γ régiospécifiquement hydroxyalkylées, dans lequel la distribution relative de la substitution sur les groupements 2-hydroxyle par rapport aux groupements 6-hydroxyle sur les résidus glucose est de 2:1 à 20:1

5. Procédé selon la revendication 4, dans lequel la distribution relative de la substitution sur les groupements 2-hydroxyle par rapport aux groupements 6-hydroxyle varie de 5:1 à 15:1.

6. Procédé de préparation de dérivés totalement ou partiellement alkylés de cyclodextrines α, β ou γ régiospécifiquement hydroxyalkylées définies dans la revendication 5 ou 6, caractérisé par la réaction de celles-ci avec un alkylsulfate ou un halogénure d'alkyle dans un milieu réactionnel contenant un hydroxyde alcalin, de l'eau et éventuellement un solvant organique.
